# EUROPEAN PATENT SPECIFICATION

(11) **EP 2 844 022 B1**
(45) Date of publication and mention of the grant of the patent: **31.07.2019**
(21) Application number: 13306183.8
(22) Date of filing: 29.08.2013
(51) Int. Cl.: H04L 29/12, H04W 76/12, H04W 76/22, H04W 88/16

(54) **Method and system for routing cdn traffic with a shadow packet data network gateway**
Verfahren und System zur Weiterleitung von Inhaltausgabenetzwerkverkehr mit einem Schatten-Paketdatennetzwerk-Gateway
Procédé et système de routage de trafic cdn avec une passerelle de réseau de données par paquets d'ombre

(43) Date of publication of application: 04.03.2015
(73) Proprietor: Alcatel Lucent, 91620 Nozay (FR)
(72) Inventor: El Mghazli, Yacine, 91620 Nozay (FR); Mongazon-Cazavet, Bruno, 91620 Nozay (FR)
(74) Representative: Novagraaf Technologies

(56) References cited:
- EP-A1- 2 466 950
- WO-A2-2011/053039
- WO-A2-2013/038167
- US-A1- 2011 075 557

## Description

### FIELD OF THE INVENTION

The present invention relates to the technical field of Content Delivery Network (CDN), and particularly to a method and a system to route transparently the CDN traffic in a mobile network.

### BACKGROUND OF THE INVENTION

By "user equipment", it is meant, here, any device comprising means permitting to connect to a mobile network such as a cellular network.

A Content Delivery Network, also referred to as Content Distribution Network (CDN), is a system making available copies of data/content, through interconnected storage means such as caches.

Data/content stored in a CDN network, may be for instance web objects, downloadable objects (ex: media files, software, documents), applications or real-time media streams. The data traffic associated with this kind of content is further referred to hereinafter as "CDN traffic".

In CDN, copies of data/content are placed at various points of the network so as to maximize bandwidth/throughputs for access to the data/content from clients throughout the network.

Unlike clients of a network accessing a same central server, CDN permits to avoid bottlenecks near a central server. Indeed, in CDN a client accesses a copy of a data/content located nearby.

For CDN, the term "near" refers to a topological distance in IP network. A topological distance may be evaluated, based on criterions such as hop counts, network latency, response to a ping (i.e. round-trip delay time) or network load.

In fact, the CDN role is to take into account the notion of IP distance and to select an appropriate delivery node (also known as Delivery Appliance - DA) where to route a user request. By "Delivery Appliance", it is meant here, a point/node in CDN, comprising means to store CDN data/content copies and means for delivering them.

CDN model is very efficient for fixed network, provided for instance by Internet Service Providers (ISP), because user IP addresses are allocated in a geographical manner. With means that are based on the IP address of a user, it is possible to identify a nearest DA (in term of network topological distance) from the user location.

However, for Mobile Network Operators (MNO), the problem in cellular networks is different since IP addresses are allocated from a pool of IP addresses, without any user location considerations. In fact, it is impossible to establish a link between user IP address and user location for identifying a nearest DA, i.e. to forward user CDN content request to the closest delivery node.

Mobile networks, such as LTE packet core (EPC for Evolved Packet Core), are generally designed in a centralized way, so that all traffic is tunneled through a single Packet Data Network Gateway (PGW) interfaced with a Packet Data Networks (PDN) through SGi link.

The PDN may be provided for instance by a CDN, comprising DAs (also known as delivery nodes) and service nodes (also known as control nodes), that are configured for managing, routing and monitoring components of the CDN.

In fact, LTE packet core is a centralized architecture because UE are one hop away from the PGW. The LTE architecture does not allow CDN service to determine a near DA based only on UE IP address, since UE IP address has no meaning (i.e. are not interpretable in terms of location) within LTE networks. Moreover, LTE architecture does not allow placing DAs lower in LTE networks than on SGi interfaces, i.e. next to PGWs because of its centralized architecture.

This appears to be a major issue, since mobile networks face the same traffic problems as fixed/wired accesses networks, and it would be definitely useful to place DAs lower in LTE networks, in order to offload the EPC.

Consequently, one problem to solve is to allow CDN operators to place DAs at lower levels in their networks, in order to avoid central server bottlenecks issues, and make DAs reachable by the users.

One first solution is based on having a dedicated local PGW near a LTE cell, allowing the UEs to access the closest DA behind such a local PGW. Nevertheless, such solution constrains the UE to deal with several LTE interfaces and to manage the CDN signaling which might be complex.

A second solution relies on introducing a function in the Serving Gateways (SGW), capable of:
- transparently looking the UE uplink data traffic in the default bearer of the "Internet" APN (Access Point Name) and reroute appropriate traffic to a near DA ;
- transparently rerouting downlink data traffic from the near DA towards the UE.

Although this second solution is very efficient because it does not imply any changes to the UE or the CDN, it has some limitations:
- each APN access, by a UE, is associated with an APN Aggregate Maximum Bit Rate (APN-AMBR), this subscription parameter being stored per APN in the Home Subscriber Server (HSS) of the LTE network. The APN-AMBR limits the aggregate bit rate that can be expected to be provided across all non-GBR (Non-Guaranteed Bit Rate) bearers of the same APN (e.g. excess traffic may get discarded by a rate shaping function). Each of those non-GBR bearers could potentially utilize the entire APN-AMBR, e.g. when the other non-GBR bearers do not carry any traffic (GBR bearers are outside the scope of APN-AMBR). The PGW enforces the APN-AMBR in downlink, whereas enforcement of APN-AMBR in uplink is performed in the UE and additionally in the eNodeB. Moreover, the Internet is typically accessed through a non-GBR APN and the second solution injects the CDN traffic, directly at the SGW level. Hence, this does not allow to enforce consistently the APN-AMBR at the PGW for the downlink traffic. This problem is very critical since the CDN traffic represents a huge part of the overall Internet traffic;
- in the second solution, the traffic is redirected based on the analysis of the IP datagrams at the SGW level. The rerouting function analyses in particular the destination IP address of all packets in the
- default bearer of the "Internet" APN and redirects those which are intended for a CDN Delivery Appliance. Even if the function can be accelerated at the hardware level (the DA address list is fixed and short), this is an additional function that the SGW has to perform.

One object of the present invention is to provide a solution to the aforementioned problems, and offers other advantages over the prior art.

Another object of the present invention is to propose a solution permitting the deployment of CDN DAs, at a lower level in mobile networks.

Another object of the present invention is to route transparently CDN content from/to a nearest DA to/from a UE connected to a mobile network.

Another object of the present invention is to allow a consistent APN-AMBR enforcement by the PGW in downlink.

WO 2013/038167 A2 shows a mobile communication network, infrastructure and method. More particular, the mobile communications network comprises a core network and a radio network for providing a wireless access interface to communication terminals. The mobile communications network is configured to receive a request to access the content from a communications terminal from the applications server, to identify that the content data is stored in the local data store, and to communicate the content data to the communications terminal from the local data store as if the content data had been communicated from the applications server.

WO 2011/053039 A2 teaches a correlation ID for local IP access. A home cellular base station comprises a selection module set to obtain a first correlation ID for enabling a direct user plane path between the home cellular base station and a local gateway, the first correlation ID being obtained from a control node upon establishment of a bearer provided access to a local IP network.

### SUMMARY OF THE INVENTION

Various embodiments are directed to addressing the effects of one or more of the problems set forth above. The invention is defined in the independent claims as appended. Additional aspects are set forth in the dependent claims.

While the various embodiments are susceptible to various modification and alternative forms, specific embodiments thereof have been shown by way of example in the drawings. It should be understood, however, that the description herein of specific embodiments is not intended to limit the various embodiments to the particular forms disclosed.

It may of course be appreciated that in the development of any such actual embodiments, implementation-specific decisions should be made to achieve the developer's specific goal, such as compliance with system-related and business-related constraints. It will be appreciated that such a development effort might be time consuming but may nevertheless be a routine understanding for those or ordinary skill in the art having the benefit of this disclosure.

### DESCRIPTION OF THE DRAWING

The objects, advantages and other features of various embodiments will become more apparent from the following disclosure and claims. The following non-restrictive description of preferred embodiments is given for the purpose of exemplification only with reference to the accompanying drawing in which
- Figure 1 is a schematic diagram illustrating the routing of data traffic according to various embodiments ;
- Figure 2 illustrates a default bearer establishment procedure between a UE and a PGW, then between a SGW and a shadow PGW according to various embodiments ;
- Figure 3 illustrates a dedicated CDN bearer establishment procedure between a UE and a PGW, then between a SGW and a shadow PGW, according to various embodiments ;
- Figure 4 illustrates the routing procedure performed for UL traffic according to various embodiments ;
- Figure 5 illustrates the routing procedure performed for DL traffic according to various embodiments.

### DETAILED DESCRIPTION OF ILLUSTRATIVE EMBODIMENTS

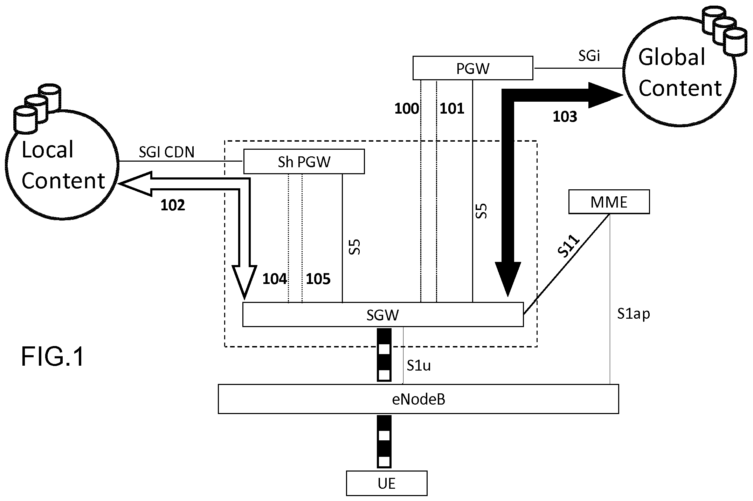

Figure 1 represents a simplified example of a LTE network comprising
- a PGW (further referred to as central PGW) coupled with a SGW through S5 interface, and coupled through SGi interface to a PDN providing a global content ;
- a Mobility Management Entity (MME) coupled with the SGW through S11 interface and comprising a Slap link towards an eNodeB ;
- an eNodeB providing a connection to a UE and comprising a S1u link towards the SGW ;
- CDN traffic from/to the UE represented in white and the rest of the traffic in black. The rest of the traffic (non-CDN) may for instance comprise VOIP packets referring to an IMS voice service.

In one embodiment a shadow PGW (aka "Sh PGW" on figures 1 to 5) is connected with the SGW through a S5 link and with at least one CDN local DA providing a local content, through a SGi CDN interface. The shadow PGW is configured for automatically and transparently routing (from central PGW point of view) a given CDN traffic to/from a nearest local DA, which avoids loading the EPC. This shadow PGW may be indifferently a separated module from the SGW or collocated near the SGW.

The MME is configured for systematically establishing a dedicated CDN bearer (per APN and per UE), in addition to a mandatory default bearer used for the rest of the traffic. The dedicated CDN bearer must be a dedicated GBR bearer, which is established all along the LTE network, i.e. from the UE dedicated Radio Access Bearer (RAB) to the PGW bearer context. As an example, the default bearer and dedicated CDN bearer between the SGW and the central PGW are respectively illustrated by the bearers **100** and **101** in figure 1.

The data plane contexts parameters, corresponding to the CDN dedicated bearer, are modified at SGW level, in order to switch i.e. reroute the CDN traffic to the shadow PGW instead of the central PGW. By "rerouting traffic", it is meant, here, routing traffic to a new/different destination instead of an initial expected/specified destination. For instance, the rerouting of CDN traffic may be based on a parameter such as TEID of the bearer, used to route the CDN packets.

Moreover, in order to encapsulate the CDN packets in the CDN dedicated bearer and the other packets in the default bearer, the UE may use a Traffic Flow Template (TFT) function. For example, in Uplink (UL) the UE normally sends the CDN traffic for an APN via a corresponding dedicated RAB, thanks to a standard UL TFT function implemented in a LTE modem. The traffic is transported from the eNodeB and arrives to the SGW in a standard GTP-U (GPRS Tunneling Protocol user plane) tunnel. The SGW analyses the GTP datagrams, and based on the Tunnel Endpoint Identifier (TEID) field that identifies the GTP tunnel, reroutes the CDN traffic to the shadow PGW instead of the central PGW. Finally, the shadow PGW forwards the CDN traffic to a nearest DA (arrow **102**). The shadow PGW is also responsible for doing the reverse redirection for downlink traffic from the nearest DA to the UE.

Indeed, the rerouting procedure is totally transparent from the central PGW point of view. Moreover, other traffic than CDN traffic from/to the UE is still forwarded between the SGW and the central PGW to/from a global content (arrow **103**), according to the prior art.

Moreover, the rerouting of the CDN traffic is performed through a "mirrored" CDN GBR dedicated bearer **105**, established between the SGW and the shadow PGW. Hence, the establishment of a "mirrored" default (non-GBR) bearer **104**, between SGW and shadow PGW is mandatory. These bearers are referred to as "mirrored" because they are established in parallel of the (default and dedicated) bearers between the SGW and the central PGW.

The establishments of such "mirrored" bearers are also transparent from the central PGW point of view.

In a preferred embodiment, information (such as UL/DL TEIDs) from the default and dedicated bearers between the UE and the central PGW are copied by the SGW, during the bearer establishment procedures.

The copied information are then used by the SGW for the creation of mirrored (i.e. equivalent) bearers and for the routing of the CDN traffic between the UE and the shadow PGW.

Before establishing a CDN dedicated bearer, a default bearer session (i.e. non-GBR) first has to be established.

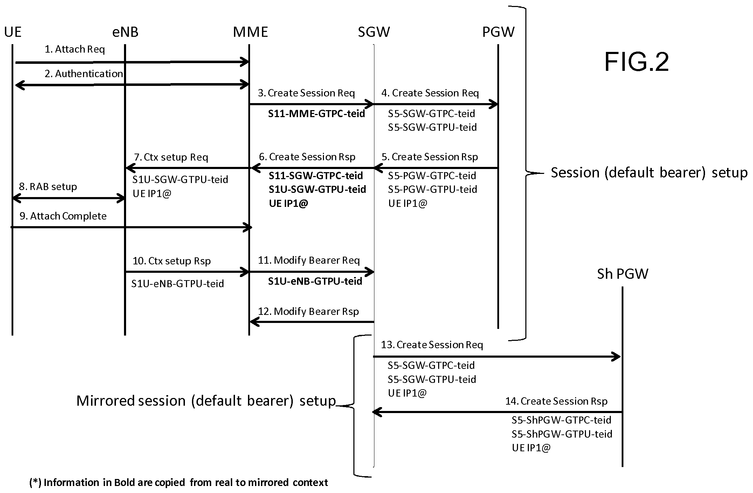

Figure 2 illustrates a default bearer establishment procedure between the UE and the central PGW, then between the SGW and the shadow PGW. The default bearer established between the SGW and the shadow PGW, is a mirrored bearer of the default bearer, which is established between the UE and the central PGW during the attach procedure of the UE. Indeed, such equivalent bearer is established by copying parts of the UE context information/parameters.

The flowchart of the default bearer establishment session between the UE and the central PGW, according to the prior art, is illustrated by the steps 1 to 12.

According to one preferred embodiment, parameters transmitted through S1 or S11 interfaces, such as GTP-U or GTP-C (GTP control plane) TEIDs and UE IP address, are copied from the messages exchanged at the SGW level.

The copy of the UE IP address is particularly important, since a default bearer is associated with a unique IP address and that any dedicated bearer acts as an additional bearer using the same IP address. Hence, for performing a transparent rerouting of the CDN traffic, a mirrored CDN dedicated bearer, associated with a mandatory mirrored default bearer, needs to use the same IP address.

For instance, with reference to figure 2, the SGW copies:
- GTP-U TEID from the SGW to the MME at S1 interface, from the "create session request" message (step 3) ;
- GTP-C TEID from the MME to the SGW at S11 interface, GTP-U TEID from the SGW to the eNodeB at S1u interface and IP address of the UE (IP1@), from the "create session response" message (step 6) ;
- GTP-U TEID from the eNodeB to the SGW at S1u interface, from the "modify bearer request" message (step 11).

At step 13, the SGW uses the copied information for requesting the creation of a mirrored default bearer with the shadow PGW ("create session request" message). And finally, at step 14, the shadow PGW establishes the mirrored default bearer with the SGW ("create session response" message) and communicates the TEIDs from the SGW to the shadow PGW to use during this session (S5-ShPGW-GTPC-teid and S5-ShPGW-GTPU-teid).

Once the default bearer between the SGW and the Shadow PGW has been created, a CDN GBR dedicated bearer between these two gateways is established. As previously, this bearer is a mirrored bearer, but this time referring to the dedicated CDNGBR bearer created between the UE and the central PGW.

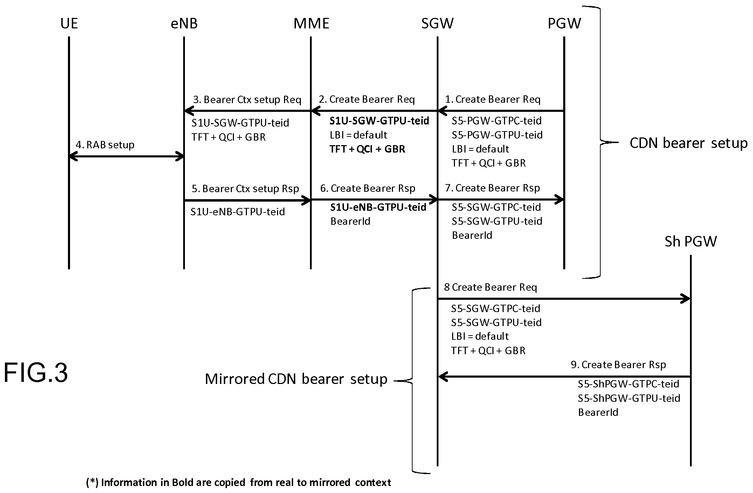

Figure 3 illustrates the CDN GBR dedicated bearer establishment procedure between the UE and the central PGW according to the prior art, and then the establishment of the mirrored CDN GBR dedicated bearer between the SGW and the shadow PGW.

The CDN GBR dedicated bearer is established right after the default bearer establishment, by configuration of the MME.

The flowchart of the CDN GBR dedicated bearer session between the UE and the central PGW, according to the prior art, is illustrated by the steps 1 to 7.

In LTE systems, a PCRF (Policy and Charging Rules Function) connected to the central PGW, triggers the establishment of the dedicated bearer by the central PGW (step 1).

Because the SGW knows a priori the IP address that is allocated to the CDN DA (be it a static or a dynamic address); based on the observation of the IP destination address in the TFT, the SGW is able to recognize when the PGW establishes a dedicated GBR bearer with a CDN DA.

According to the preferred embodiment, when the SGW recognizes a creation procedure of a CDN GBR dedicated bearer between the UE and the central PGW, parameters from the messages exchanged during this procedure are copied at SGW level.

For instance with reference to figure 3, the SGW copies:
- GTP-U TEID from the SGW to the MME at S1u interface, TFT, QCI (QoS class of identifier) and GBR information, from the "create bearer request" message (step 2) ;
- GTP-U TEID from the eNodeB to the SGW at S1u interface, from the "create bearer response" message (step 6).

Then the SGW uses the copied information (step 8) for requesting the creation of a mirrored CDN GBR dedicated bearer with the shadow PGW ("create bearer request" message), with using the same parameters as the "real" CDN GBR dedicated bearer.

Finally, at step 9, the shadow PGW establishes the mirrored dedicated CDN bearer with the SGW ("create bearer response" message) and communicates the TEIDs from the SGW to the shadow PGW to use during this session (S5-ShPGW-GTPC-teid and S5-ShPGW-GTPU-teid).

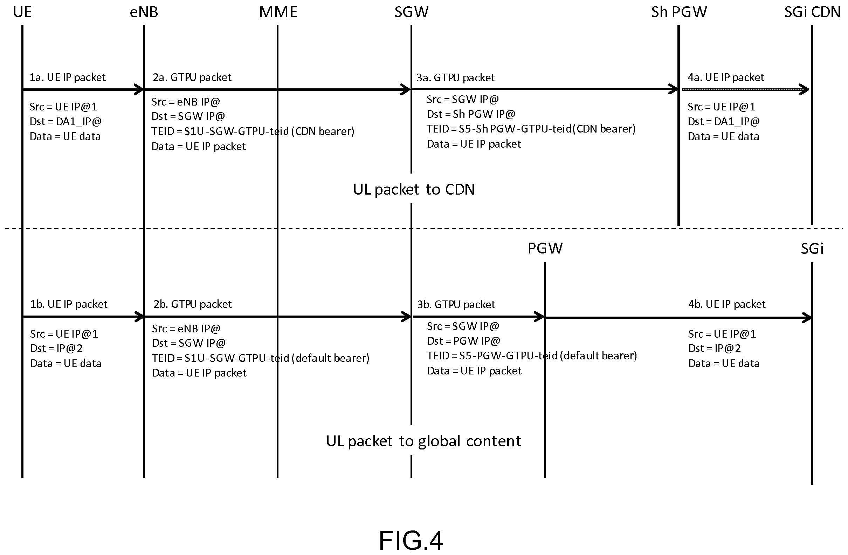

Once the dedicated bearer between the SGW and the shadow PGW has been established, the CDN traffic is routed thanks to this mirrored bearer. Indeed, the CDN dedicated bearer context between the SGW and the central PGW still exists, but is not further used for routing the CDN traffic. Figures 4 shows the routing procedure performed for UL traffic coming from a UE source "Src". A UE attached to an eNodeB "eNB", with respective IP addresses "UE IP@1" and "eNB IP@" may request to a destination "Dst":
- either a CDN content stored by a DA at IP address "DA1_IP@" (step 1a) ;
- either any other global content in a storage node at IP address "IP@2" (step 1b).

The UE encapsulates the packets referring to the request in the corresponding bearers (i.e. tunnels) towards the SGW, thanks to a TFT function:
- packets requesting a CDN content (i.e. destination address is a DA address) are encapsulated in a CDN GBR dedicated bearer with using a corresponding S1U-SGW-GTPU-teid (sep 2a) ;
- packets requesting other content are encapsulated in a default bearer (i.e. non-GBR) with using a corresponding S1U-SGW-GTPU-teid (sep 2b).

The packets are transmitted from the eNodeB and arrive to the SGW in their respective (GTP-U) tunnels. The SGW reads in the received datagrams, the bearer TEID referring to the GTP-U tunnel i.e. S1U-SGW-GTPU-teid.

The SGW knows the GTP-U TEIDs information from the default and dedicated CDN bearers, during their respective establishment procedure. Hence, the SGW is able to differentiate the default bearer traffic from the CDN GBR dedicated bearer traffic, by matching each received S1U-SGW-GTPU-teid with one of the copied TEIDs.

If the received S1U-SGW-GTPU-teid matches the one copied referring to CDN GBR dedicated bearer, the SGW reroutes the traffic towards the shadow PGW. The packets are rerouted in the mirrored CDN GBR dedicated bearer, with using the S5-ShPGW-GTPU-teid (step 3a). Finally the shadow PGW routes the packets toward a nearest local DA through SGi CDN interface (step 4a).

Otherwise, if the received S1U-SGW-GTPU-teid matches the one copied referring to default bearer i.e. refers to a global content request, the SGW routes the traffic towards the central PGW. The packets are routed in the default bearer between the SGW and the PGW, with using the S5-PGW-GTPU-teid (step 3b). Finally, according to the prior art procedure, the PGW routes the request through SGi interface (step 4b), towards the storage node with the requested global content.

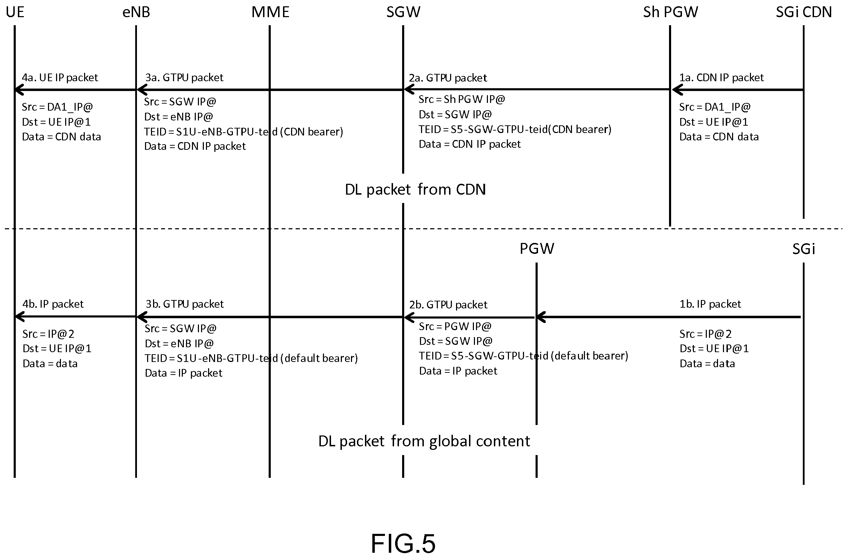

Now with reference to figure 5, is shown the routing procedure performed for DL traffic coming from the shadow PGW or from the central PGW, in response to the UE request (same references as in figure 4 are used).

In response to the UE (destination "Dst") request for data content, a CDN content or a global content, is received respectively by the shadow PGW (step 1a) or the central PGW (step 1b), from a source "Src" that is respectively:
- a DA with IP address "DA1_IP@" ;
- anything with IP address "IP@2".

Following the reception of the data content:
- the shadow PGW encapsulates the packets referring to the received CDN content into the mirrored CDN GBR dedicated bearer, and sends them to the SGW, using the corresponding TEID (S5-SGW-GTPU-teid) (step 2a) ;
- the central PGW encapsulates the packets referring to the received global content into the default bearer, and sends them to the SGW with using the corresponding TEID (S5-SGW-GTPU-teid) (step 2b).

Packets referring to the requested content are received by the SGW in their respective (GTP-U) tunnels. Based on the copied information referring to the default and dedicated CDN bearers, the SGW differentiates the S5-SGW-GTPU-teids and:
- sends the CDN packets to the eNodeB, with using the CDN GBR dedicated bearer, based on the copied S1U-eNB-GTPU-teid ; (step 3a)
- sends the packets referring to the global contents to the eNodeB, using the default bearer, based on the copied S1U-eNB-GTPU-teid. (step 3b)

Finally, the eNodeB forwards the CDN content (step 4a) or the global content (step 4b) to the UE.

It is to be noted that in the described embodiments UL/DL traffic referring to a global content is routed with a default, i.e. a non-GBR bearer. Nevertheless any other non-CDN dedicated bearer using the same IP session as the default bearer may also be considered.

In one embodiment, the shadow PGW comprises a Dynamic Network Address Translation (DNAT) function.

When a UE requests a CDN content, according to the prior art, this request is redirected towards a unique first IP address, referring to a generic DA providing a global content. According to the aforementioned embodiments, UL CDN traffic is rerouted towards the shadow PGW through a mirrored CDN dedicated bearer.

The DNAT function in the shadow PGW, is in charge of replacing the first generic IP address with a second IP address of a nearest local DA (in term of network topological distance) in order to route the request. The mapping between the generic DA IP address and the nearest DA IP address may be configured locally. This prevents the CDN from selecting the DA IP address, in case where no topology may be deduced from the UE IP address.

One advantage with using a shadow PGW is that there is no need to add a new function in the SGW in order to reroute the CDN traffic towards a nearest DA. Existing standard functional blocks like GTP tunnels management at SGW level are just provisioned. Particularly, the CDN bearer traffic is just differentiated at SGW level based on TEID. Advantageously, because the dedicated CDN bearer towards the shadow PGW is GBR, the DL enforcement of APN-AMBR bearer for non-GBR bearers at the central PGW is not affected. Indeed, each GBR bearer according to the LTE standard is associated with a GBR and a MBR (QoS parameters). According to the described embodiments, these parameters are handled by the shadow PGW instead of the PGW. Hence, at the central PGW, even if a dedicated CDN bearer context exists, there is no traffic on this bearer and the MBR is never exceeded.

Advantageously, the above described embodiments are fully compatible with LTE standards. Indeed, the SGWs connected to a shadow PGW require minor and reasonable enhancements. The shadow PGW may be connected to some SGWs, whereas other SGW may remain unchanged. Another advantage of the present invention is that the shadow PGW can be interconnected with at least one DA providing CDN local content. In fact, deployment of locals DAs can be linked to the deployment of the shadow PGW. This advantageously permits to place delivery appliances "close" to cell sites and in a much large number of places. It brings finer granularity and freedom for MNO and CDN operators can leverage on. Advantageously, the described embodiments do not require any changes in 3GPP standards.

In the Previous description, a CDN is interfaced with LTE network. Nevertheless, it is to be noted, that any other 3GPP mobile network, any equivalent mobile network, or any post-mobile network (such as LTE Advanced) could be also considered instead of the LTE network. More generally, the shadow PGW may be any additional PGW interfaced between at least one DA and a gateway, the gateway being already connected with a first PGW of a mobile network.

## Claims

1. A system for routing data in a mobile network, this system comprising the following elements
- a serving gateway (SGW) interfaced between a base station and a first packet data network gateway (PGW) ;
- a second packet data network gateway (Sh PGW) interfaced between the serving gateway (SGW) and at least one delivery appliance of a content delivery network (Local Content) ;
wherein
the serving gateway (SGW) is configured for
∘ establishing a default bearer (100) and a content delivery network dedicated bearer (101), with the first packet data network gateway (PGW);
∘ copying information from the default bearer (100) and from the content delivery network dedicated bearer (101);
∘ establishing a default bearer (104) and a content delivery network dedicated bearer (105) with the second packet data network gateway (Sh PGW) with using the copied information;
∘ routing (103 102) data between the base station (eNodeB) and the first (PGW) or second (Sh PGW) packet data network gateway;
∘ routing uplink data received from the base station
- using (102) the content delivery network dedicated bearer (105) established with the second packet data network gateway (Sh PGW), when the uplink data is identified as referring to content delivery network data;
- using (103) a non-content delivery network dedicated bearer (100) established with the first packet data network gateway (PGW) otherwise;
∘ routing downlink data received in response to uplink data, from the first (PGW) or second (Sh PGW) packet data network gateway to the base station (eNodeB),
wherein the second packet data network gateway (Sh PGW) is configured for routing (102)
- uplink data received from the serving gateway (SGW) to a delivery appliance with using a dynamic network address translation function ;
- downlink data received from the delivery appliance in response to uplink data to the serving gateway (SGW);
wherein the serving gateway (SGW) is configured for copying information comprising
- tunnel endpoint identifiers and IP address used by the default bearer (100) established with the first packet data network gateway (PGW);
- tunnel endpoint identifiers, traffic flow template, quality of service class of identifier and guaranteed bit rate used by the content delivery network dedicated bearer (101) established with the first packet data network gateway (PGW).

2. The system of claim 1, wherein the non-content delivery network dedicated bearer (100) established with the first packet data network gateway (PGW) is the default bearer.

3. The system of claim 1, wherein the serving gateway (SGW) is configured for identifying and routing data referring to content delivery network based on the copied tunnel endpoint identifiers information.

4. The system of any of the claims 1 to 3, wherein the serving gateway (SGW) is configured for copying information from the default bearer (100) and from the content delivery network dedicated bearer (101), during their establishment with the first packet data network gateway (PGW).

5. A method for routing data in a mobile network, this method comprising the steps of
- establishing a default bearer (100) and a content delivery network dedicated bearer (101), between a serving gateway (SGW) and a first packet data network gateway (PGW), the serving gateway (SGW) being interfaced between a base station (eNodeB) and the first packet data network gateway (PGW);
- copying information from the default bearer (100) and from the content delivery network dedicated bearer (101) by the serving gateway (SGW) ;
- establishing a default bearer (104) and a content delivery network dedicated bearer (105), between the serving gateway (SGW) and a second packet data network gateway (Sh PGW) with using the copied information, the second packet data network gateway (Sh PGW) being interfaced between the serving gateway (SGW) and at least one delivery appliance of a content delivery network (Local Content);
- routing data between the base station (eNodeB) and the first (PGW) or second (Sh PGW) packet data network gateway;
- routing uplink data received by the serving gateway (SGW) from the base station (enodeB)
∘ using (102) the content delivery network dedicated bearer (105) established with the second packet data network gateway (Sh PGW), when the uplink data is identified as referring to content delivery network data ;
∘ using (103) a non-content delivery network dedicated bearer (100) established with the first packet data network gateway (PGW) otherwise ;
- routing downlink data received by the serving gateway (SGW) in response to uplink data, from the first (PGW) or second (SH PGW) packet data network gateway to the base station (eNodeB);
a routing step (102) by the second packet data network gateway (SH PGW) of
- uplink data received from the serving gateway (SGW) to a delivery appliance, using a dynamic network address translation function ;
- downlink data received from the delivery appliance in response to uplink data to the serving gateway (SGW);
wherein the information copied by the serving gateway (SGW) comprises tunnel endpoint identifiers and IP address used by the default bearer (100) established with the first packet data network gateway (PGW) ;
- tunnel endpoint identifiers, traffic flow template, quality of service class of identifier and guaranteed bit rate used by the content delivery network dedicated bearer (101) established with the first packet data network gateway (PGW).

6. The method of claim 5, wherein the non-content delivery network dedicated bearer (100) established with the first packet data network gateway (PGW) is the default bearer.

7. The method of claim 5, wherein data referring to content delivery network is identified by the serving gateway (SGW) based on the copied tunnel endpoint identifiers information.

8. The method of any of claims 5 to 7, wherein the information is copied by the serving gateway (SGW) from the default bearer (100) and from the content delivery network dedicated bearer (101), during their establishment with the first packet data network gateway (PGW).

9. Computer program product implemented on a processing unit of a computer, the computer program product including code sections for performing instructions corresponding to all the steps of a method according to any of claims 5 to 8.

## Patentansprüche

1. System zum Leiten von Daten in einem Mobilfunknetz, wobei dieses System die folgenden Elemente umfasst:
- ein bedienendes Gateway (SGW), das zwischen einer Basisstation und einem ersten Paketdatennetzwerk-Gateway (PGW) verbunden ist;
- ein zweites Paketdatennetzwerk-Gateway (Sh PGW), das zwischen dem bedienenden Gateway (SGW) und mindestens einer Übermittlungsvorrichtung eines Inhaltübermittlungsnetzwerks (Local Content) verbunden ist;
wobei
das bedienende Gateway (SGW) für Folgendes ausgelegt ist:
∘ Einrichten eines Standard-Bearers (100) und eines Inhaltübermittlungsnetzwerk-dedizierten Bearers (101) mit dem ersten Paketdatennetzwerk-Gateway (PGW);
∘ Kopieren von Informationen von dem Standard-Bearer (100) und von dem Inhaltübermittlungsnetzwerk-dedizierten Bearer (101);
∘ Einrichten eines Standard-Bearers (104) und eines Inhaltübermittlungsnetzwerk-dedizierten Bearers (105) mit dem zweiten Paketdatennetzwerk-Gateway (Sh PGW) unter Verwendung der kopierten Informationen;
∘ Leiten (103 102) von Daten zwischen der Basisstation (eNodeB) und dem ersten (PGW) oder zweiten Paketdatennetzwerk-Gateway (Sh PGW) ;
∘ Leiten von Uplink-Daten, die von der Basisstation empfangen wurden
- Verwenden (102) des Inhaltübermittlungsnetzwerk-dedizierten Bearers (105), der mit dem zweiten Paketdatennetzwerk-Gateway (Sh PGW) eingerichtet wurde, wenn die Uplink-Daten als auf Inhaltübermittlungsnetzwerkdaten verweisend identifiziert werden;
- Verwenden (103) eines nicht Inhaltübermittlungsnetzwerk-dedizierten Bearers (100), der mit dem ersten Paketdatennetzwerk-Gateway (PGW) eingerichtet wurde, anderenfalls;
o Leiten von Downlink-Daten, die als Reaktion auf Uplink-Daten empfangen wurden, von dem ersten (PGW) oder zweiten Paketdatennetzwerk-Gateway (Sh PGW) zu der Basisstation (eNodeB), wobei das zweite Paketdatennetzwerk-Gateway (Sh PGW) zum Leiten (102) ausgelegt ist
- von Uplink-Daten, die von dem bedienenden Gateway (SGW) empfangen wurden, zu einer Übermittlungsvorrichtung unter Verwendung einer dynamischen Netzwerkadressenübersetzungsfunktion;
- von Downlink-Daten, die von der Übermittlungsvorrichtung empfangen wurden, als Reaktion auf Uplink-Daten zu dem bedienenden Gateway (SGW);
wobei das bedienende Gateway (SGW) zum Kopieren von Informationen, die Folgendes enthalten, ausgelegt ist:
- Tunnelendpunktkennungen und IP-Adressen, die von dem Standard-Bearer (100) genutzt werden, der mit dem ersten Paketdatennetzwerk-Gateway (PGW) eingerichtet wurde;
- Tunnelendpunktkennungen, Verkehrsflussvorlage, Quality-of-Service-Klasse der Kennung und garantierte Bitrate, die von dem Inhaltübermittlungsnetzwerk-dedizierten Bearer (101) verwendet werden, der mit dem ersten Paketdatennetzwerk-Gateway (PGW) eingerichtet wurde.

2. System nach Anspruch 1, wobei der nicht Inhaltübermittlungsnetzwerk-dedizierte Bearer (100), der mit dem ersten Paketdatennetzwerk-Gateway (PGW) eingerichtet wurde, der Standard-Bearer ist.

3. System nach Anspruch 1, wobei das bedienende Gateway (SGW) zum Identifizieren und Leiten von Daten, die auf der Basis der kopierten Informationen der Tunnelendpunktkennungen auf ein Inhaltübermittlungsnetzwerk verweisen, ausgelegt ist.

4. System nach einem der Ansprüche 1 bis 3, wobei das bedienende Gateway (SGW) zum Kopieren von Informationen von dem Standard-Bearer (100) und von dem Inhaltübermittlungsnetzwerk-dedizierten Bearer (101) während ihrer Einrichtung mit dem ersten Paketdatennetzwerk-Gateway (PGW) ausgelegt ist.

5. Verfahren zum Leiten von Daten in einem Mobilfunknetz, wobei dieses Verfahren die folgenden Schritte umfasst:
- Einrichten eines Standard-Bearers (100) und eines Inhaltübermittlungsnetzwerk-dedizierten Bearers (101) zwischen einem bedienenden Gateway (SGW) und einem ersten Paketdatennetzwerk-Gateway (PGW), wobei das bedienende Gateway (SGW) zwischen einer Basisstation (eNodeB) und dem ersten Paketdatennetzwerk-Gateway (PGW) verbunden ist;
- Kopieren von Informationen von dem Standard-Bearer (100) und von dem Inhaltübermittlungsnetzwerk-dedizierten Bearer (101) durch das bedienende Gateway (SGW);
- Einrichten eines Standard-Bearers (104) und eines Inhaltübermittlungsnetzwerk-dedizierten Bearers (105) zwischen dem bedienenden Gateway (SGW) und einem zweiten Paketdatennetzwerk-Gateway (Sh PGW) unter Verwendung der kopierten Informationen, wobei das zweite Paketdatennetzwerk-Gateway (Sh PGW) zwischen dem bedienenden Gateway (SGW) und mindestens einer Übermittlungsvorrichtung eines Inhaltübermittlungsnetzwerks (Local Content) verbunden ist;
- Leiten von Daten zwischen der Basisstation (eNodeB) und dem ersten (PGW) oder zweiten Paketdatennetzwerk-Gateway (Sh PGW);
- Leiten von Uplink-Daten, die durch das bedienende Gateway (SGW) von der Basisstation (eNodeB) empfangen wurden;
∘ Verwenden (102) des Inhaltübermittlungsnetzwerk-dedizierten Bearers (105), der mit dem zweiten Paketdatennetzwerk-Gateway (Sh PGW) eingerichtet wurde, wenn die Uplink-Daten als auf Inhaltübermittlungsnetzwerkdaten verweisend identifiziert werden;
∘ Verwenden (103) eines nicht Inhaltübermittlungsnetzwerk-dedizierten Bearers (100), der mit dem ersten Paketdatennetzwerk-Gateway (PGW) eingerichtet wurde, anderenfalls;
- Leiten von Downlink-Daten, die durch das bedienende Gateway (SGW) als Reaktion auf Uplink-Daten empfangen wurden, von dem ersten (PGW) oder zweiten Paketdatennetzwerk-Gateway (SH PGW) zu der Basisstation (eNodeB);
ein Leitungsschritt (102) durch das zweite Paketdatennetzwerk-Gateway (SH PGW)
- von Uplink-Daten, die von dem bedienenden Gateway (SGW) empfangen wurden, zu einer Übermittlungsvorrichtung unter Verwendung einer dynamischen Netzwerkadressenübersetzungsfunktion;
- von Downlink-Daten, die von der Übermittlungsvorrichtung empfangen wurden, als Reaktion auf Uplink-Daten zu dem bedienenden Gateway (SGW);
wobei die durch das bedienende Gateway (SGW) kopierten Informationen Tunnelendpunktkennungen und IP-Adressen umfassen, die von dem Standard-Bearer (100) genutzt werden, der mit dem ersten Paketdatennetzwerk-Gateway (PGW) eingerichtet wurde;
- Tunnelendpunktkennungen, Verkehrsflussvorlage, Quality-of-Service-Klasse der Kennung und garantierte Bitrate, die von dem Inhaltübermittlungsnetzwerk-dedizierten Bearer (101) verwendet werden, der mit dem ersten Paketdatennetzwerk-Gateway (PGW) eingerichtet wurde.

6. Verfahren nach Anspruch 5, wobei der nicht Inhaltübermittlungsnetzwerk-dedizierte Bearer (100), der mit dem ersten Paketdatennetzwerk-Gateway (PGW) eingerichtet wurde, der Standard-Bearer ist.

7. Verfahren nach Anspruch 5, wobei Daten, die auf ein Inhaltübermittlungsnetzwerk verweisen, auf der Basis der kopierten Tunnelendpunktkennungsinformationen durch das bedienende Gateway (SGW) identifiziert werden.

8. Verfahren nach einem der Ansprüche 5 bis 7, wobei die Informationen durch das bedienende Gateway (SGW) von dem Standard-Bearer (100) und von dem Inhaltübermittlungsnetzwerk-dedizierten Bearer (101) während ihrer Einrichtung mit dem ersten Paketdatennetzwerk-Gateway (PGW) kopiert werden.

9. Computerprogrammprodukt, das auf einer Verarbeitungseinheit eines Computers implementiert wird, wobei das Computerprogrammprodukt Codeabschnitte zum Durchführen von Befehlen enthält, die allen Schritten eines Verfahrens gemäß einem der Ansprüche 5 bis 8 entspricht.

## Revendications

1. Système d'acheminement de données dans un réseau mobile, ce système comprenant les éléments suivants
- un dispositif de passerelle de desserte (SGW - serving gateway) interfacé entre une station de base et un premier dispositif de passerelle d'un réseau de données par paquets (PGW - packet gateway) ;
- un second dispositif de passerelle du réseau de données par paquets (Sh PGW) interfacé entre le dispositif de passerelle de desserte (SGW) et au moins un appareil de distribution d'un réseau de distribution de contenu (contenu local) ;
dans lequel
le dispositif de passerelle de desserte (SGW) est configuré pour
∘ établir un support par défaut (100) et un support dédié à un réseau de distribution de contenu (101), avec le premier dispositif de passerelle du réseau de données par paquets (PGW) ;
∘ copier des informations à partir du support par défaut (100) et du support dédié au réseau de distribution de contenu (101) ;
∘ établir un support par défaut (104) et un support dédié à un réseau de distribution de contenu (105), avec le second dispositif de passerelle du réseau de données par paquets (Sh PGW) avec utilisation des informations copiées ;
∘ acheminer (103, 102) les données entre la station de base (eNodeB) et le premier (PGW) ou le second (Sh PGW) dispositif de passerelle du réseau de données par paquets ;
∘ acheminer les données de la liaison montante reçues de la station de base
- utiliser (102) le support dédié au réseau de distribution de contenu (105) établi avec le second dispositif de passerelle du réseau de données par paquets (Sh PGW), lorsque les données de la liaison montante sont identifiées comme faisant référence aux données du réseau de distribution de contenu ;
- utiliser (103) un support dédié à un réseau de distribution sans contenu (100), établi avec le premier dispositif de passerelle du réseau de données par paquets (PGW), dans le cas contraire ;
∘ acheminer des données de la liaison descendante reçues en réponse aux données de la liaison montante, du premier (PGW) ou du second (Sh PGW) dispositif de passerelle du réseau de données par paquets vers la station de base (eNodeB),
dans lequel le second dispositif de passerelle du réseau de données par paquets (Sh PGW) est configuré pour acheminer (102)
- les données de la liaison montante reçues du dispositif de passerelle de desserte (SGW) vers un appareil de distribution utilisant une fonction de conversion dynamique de l'adresse du réseau ;
- les données de la liaison descendante reçues de l'appareil de distribution en réponse à des données de la liaison montante vers le dispositif de passerelle de desserte (SGW) ;
dans lequel le dispositif de passerelle de desserte (SGW) est configuré pour copier des informations comprenant
- des identifiants du point de terminaison de tunnel et de l'adresse IP utilisés par le support par défaut (100) établi avec le premier dispositif de passerelle du réseau de données par paquets (PGW) ;
- des identifiants du point de terminaison de tunnel, un modèle de flux de trafic, une classe de la qualité de service de l'identifiant et le débit binaire garanti utilisés par le support dédié du réseau de distribution de contenu (101) établi avec le premier dispositif de passerelle du réseau de données par paquets (PGW).

2. Système selon la revendication 1, dans lequel le support dédié au réseau de distribution sans contenu (100) établi avec le premier dispositif de passerelle du réseau de données par paquets (PGW) est le support par défaut.

3. Système selon la revendication 1, dans lequel le dispositif de passerelle de desserte (SGW) est configuré pour identifier et acheminer des données faisant référence au réseau de distribution de contenu sur la base des informations sur les identifiants du point de terminaison de tunnel copiées.

4. Système selon l'une quelconque des revendications 1 à 3, dans lequel le dispositif de passerelle de desserte (SGW) est configuré pour copier des informations du support par défaut (100) et du support dédié au réseau de distribution de contenu (101), lors de leur établissement avec le premier dispositif de passerelle du réseau de données par paquets (PGW).

5. Procédé d'acheminement de données dans un réseau mobile, ce procédé comprenant les étapes suivantes :
∘ l'établissement d'un support par défaut (100) et d'un support dédié à un réseau de distribution de contenu (101), entre un dispositif de passerelle de desserte (SGW) et un premier dispositif de passerelle du réseau de données par paquets (PGW), le dispositif de passerelle de desserte (SGW) étant interfacé entre une station de base (eNodeB) et le premier dispositif de passerelle du réseau de données par paquets (PGW) ;
- la copie des informations du support par défaut (100) et du support dédié au réseau de distribution de contenu (101) par le dispositif de passerelle de desserte (SGW) ;
- l'établissement d'un support par défaut (104) et d'un support dédié au réseau de distribution de contenu (105), entre le dispositif de passerelle de desserte (SGW) et un second dispositif de passerelle du réseau de données par paquets (Sh PGW) avec utilisation des informations copiées, le second dispositif de passerelle du réseau de données par paquets (Sh PGW) étant interfacé entre le dispositif de passerelle de desserte (SGW) et au moins un appareil de distribution du réseau de distribution de contenu (contenu local) ;
- l'acheminement des données entre la station de base (eNodeB) et le premier (PGW) ou le second (Sh PGW) dispositif de passerelle du réseau de données par paquets ;
- l'acheminement des données de la liaison montante reçues par le dispositif de passerelle de desserte (SGW) depuis la station de base (eNodeB)
∘ l'utilisation (102) du support dédié au réseau de distribution de contenu (105) établi avec le second dispositif de passerelle du réseau de données par paquets (Sh PGW), lorsque les données de la liaison montante sont identifiées comme faisant référence aux données du réseau de distribution de contenu ;
∘ l'utilisation (103) d'un support dédié (100) à un réseau de distribution sans contenu, établi avec le premier dispositif de passerelle de réseau de données par paquets (PGW), dans le cas contraire ;
- l'acheminement des données de la liaison descendante reçues par le dispositif de passerelle de desserte (SGW) en réponse à des données de la liaison montante, depuis le premier (PGW) ou le second (Sh PGW) dispositif de passerelle du réseau de données par paquets vers la station de base (eNodeB) ;
et une étape d'acheminement (102) par le second dispositif de passerelle du réseau de données par paquets (Sh PGW) concernant
- les données de la liaison montante reçues du dispositif de passerelle de desserte (SGW) vers un appareil de distribution, en utilisant une fonction de conversion dynamique de l'adresse du réseau
- les données de la liaison descendante reçues de l'appareil de distribution en réponse à des données de la liaison montante vers le dispositif de passerelle de desserte (SGW) ;
dans lequel les informations copiées par le dispositif de passerelle de desserte (SGW) comprennent des identifiants du point de terminaison de tunnel et une adresse IP utilisés par le support par défaut (100) établi avec le premier dispositif de passerelle du réseau de données par paquets (PGW) ;
- des identifiants du point de terminaison de tunnel, un modèle de flux de trafic, une classe de la qualité de service de l'identifiant et le débit binaire garanti utilisés par le support dédié au réseau de distribution de contenu (101) établi avec le premier dispositif de passerelle du réseau de données par paquets (PGW).

6. Procédé selon la revendication 5, dans lequel le support dédié au réseau de distribution sans contenu (100) établi avec le premier dispositif de passerelle du réseau de données par paquets (PGW) est le support par défaut.

7. Procédé selon la revendication 5, dans lequel les données faisant référence au réseau de distribution de contenu sont identifiées par le dispositif de passerelle de desserte (SGW) sur la base des informations des identifiants du point de terminaison de tunnel copiées.

8. Procédé selon l'une quelconque des revendications 5 à 7, dans lequel les informations sont copiées par le dispositif de passerelle de desserte (SGW) du support par défaut (100) et du support dédié au réseau de distribution de contenu (101), lors de leur établissement avec le premier dispositif de passerelle du réseau de données par paquets (PGW).

9. Progiciel informatique mis en oeuvre sur une unité de traitement d'un ordinateur, le progiciel informatique comprenant des sections de code pour exécuter des instructions correspondant à toutes les étapes d'un procédé selon l'une quelconque des revendications 5 à 8.
